# EUROPEAN PATENT APPLICATION

(11) **EP 3 634 018 A1**
(43) Date of publication of application: **08.04.2020**
(21) Application number: 18198107.7
(22) Date of filing: 02.10.2018
(51) Int. Cl.: H04W 4/70

(54) **SYSTEM FOR DATA COMMUNICATION IN A NETWORK OF LOCAL DEVICES**

(71) Applicant: Siemens Aktiengesellschaft, 80333 München (DE)
(72) Inventor: Baierlein, Thomas, 90491 Nürnberg (DE); Boche, Maik, 90522 Oberasbach (DE); Kleemann, Aila, 91058 Erlangen (DE); Simakov, Dmitry, 76131 Karlsruhe (DE)

(57) **Abstract**

The present invention relates to a system (100) for data communication in a network between two or more local devices (110, 120, 130) and a cloud computing platform (150), in which data collected and/or stored on at least one local device(110) are transmitted to a cloud computing platform (150) using at least one communication protocol (a₁, a₂,..., aₙ) and processed by a translation algorithm (A) executed in a translator module (170) of the cloud computing platform (150), wherein the data are transferred to at least one another communication protocol (b₁, b₂, ..., bₙ) which is processable or executable by at least one second local device (120) and submitted to the at least one second device (120).

## Description

The present invention generally relates to a system for data communication in a network between two or more local devices and a cloud computing platform, in which data collected and/or stored on at least one local device are transmitted to a cloud computing platform.

There is an increasing trend of industrial automation systems, assets, machines, sensors, mobile devices etc. in all fields of the industrial production, energy, transportation and in other areas as banking, retail, hospitality and medical health care systems being connected via network connections to the Industrial Internet of Things (IIoT) directly or via cloud gateways. Data analytics (data mining, deep learning, artificial intelligence) is a core aspect in this whole area of connected things and generates a new level of knowledge and usability. According to statistical predictions about 50 billion interconnected devices are forecast for 2020 worldwide. This corresponds to about 6.5 interconnected devices per person. However, all these different devices communicate with each other using different formats and protocols.

In systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographical distributed, connected with each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

The communication between the IIoT devices could be performed on the one hand at the edge of the IIoT devices or the IIoT gateways or the cloud computing platform as the central computing infrastructure. If communication between IIoT devices is performed at the edge of the local IIoT devices itself, it is necessary that the IIoT devices could understand each other which means that they communicate by the language and protocols.

However, most of the IIoT devices use different protocols and data formats so that a direct communication between the devices is often not possible. Therefore, a communication between two devices is only possible if they support the same protocols respectively. Only a small part of devices can support all available protocols which has various reasons. Many devices do not have enough memory capacity or computer performance to support different protocols, so that currently many devices cannot communicate with each other.

In view of the foregoing it is thus an object of the present invention to provide techniques that assist in improving the communication between local devices connected in a network and to allow an automated communication (M2M communication) between them.

According to a first aspect, the invention provides a system for data communication in a network between two or more local devices and a cloud computing platform, in which data collected and/or stored on at least one local device are transmitted to a cloud computing platform using at least one communication protocol a1, a2,..., an and processed by a translator module of the cloud computing platform, wherein the data are transferred or transformed to at least one another communication protocol b1, b2, ..., bn which is processable (understandable) by at least one second local device and submitted to the at least one second device.

Embodiments of the invention can be used, by way of example, for the communication and evaluation of e.g. vibration and other data in industrial plants, image data in the scientific and medical area, data for drug development and clinical trials using medical devices in the pharmaceutical sphere, data for route computations in the navigation field, data for image recognition in the automobile area and computer games, etc.

In further advantageous embodiments, the local devices and the cloud computing platform are connected by a gateway which is configured to transmit the data from the at least first local device with the first communication protocol a₁, a₂,..., aₙ to the cloud computing platform and to submit the data with the second communication protocol b₁, b₂, ..., bₙ from the cloud computing platform to the at least one second local device.

In another advantageous embodiment, the translation algorithm A comprises sub-algorithms SA1, SA2, ... SAn which are executable in a serial and/or parallel sequence.

Furthermore, a workflow regarding the sequence and the location of the execution of the sub-algorithms SA1, SA2, ... SAn may be controlled by a software application.

Preferably, the translation algorithm A is configured as a clustering and/or a neural network and/or a Support Vector Machines and/or subdivided into sub-algorithms (SA1, SA2,... San) .

In another advantageous embodiment, the processed data are collected from vibration sensors and/or acoustical sensors and/or optical sensors and/or temperature sensors and/or pressure sensors and/or chemical and/or piezoelectric sensors.

Advantageously, several local devices are connected in the network.

In a preferred embodiment, the two or more local devices are configured as an industrial pump, a medical device, an image device, mobile device, an automotive device and/or an analytical scientific instrument.

According to a second aspect, the invention provides a method data communication in a network between two or more local devices and a cloud computing platform, comprising the steps of
- collecting and/or storing data on at least one local device,
- transmitting the data to a cloud computing platform using at least one communication protocol a₁, a₂,..., aₙ,
- processing the data by a translator module of the cloud computing platform, wherein the data are transformed (converted) to at least one another communication protocol b₁, b₂, ..., bₙ which is executable by at least one second local device, and
- submitting the data with the other communication protocol b₁, b₂, ..., bₙ to the at least one second device.

In another advantageous embodiment, the method may comprise the steps of:
- connecting the local devices and the cloud computing platform by a gateway,
- transmitting the data from the at least one first local device with the first communication protocol a₁, a₂,..., aₙ to the cloud computing platform by the gateway;
- submitting the data with the second communication protocol b₁, b₂, ..., bₙ from the cloud computing platform to the at least one second local device by the gateway.

Additionally, the invention provides, according to a third aspect, a local device configured for a system according to the first aspect of the invention, wherein the local device is configured as an industrial pump, a medical device, an image device, mobile device, an automotive device and/or an analytical scientific instrument.

According to a fourth aspect, the invention provides a cloud computing platform configured for use in a system according the first aspect of the invention.

According to a fifth aspect, the invention provides a computer program product comprising an executable program code configured to, when executed, perform the method according to the second aspect.

According to a sixth aspect, the invention provides a non-transient computer-readable data storage medium comprising an executable program code configured to, when executed, perform the method according to the second aspect. The non-transient computer-readable data storage medium may comprise, or consist of, any type of computer memory, in particular a semiconductor memory.

According to a seventh aspect, the invention provides a data stream representing, or configured to provide, program code configured to, when executed, perform the method according to the second aspect.

Additional features, aspects and advantages of the invention or of its embodiments will become apparent on reading the detailed description in conjunction with the following figures:
- FIG 1: provides a general overview of a system according to an embodiment of the first aspect of the invention;
- FIG 2: shows a schematic flow diagram illustrating an embodiment of a method according to an embodiment of the second aspect of the present invention;
- FIG 3: schematically illustrated a computer program product according to an embodiment of the fifth aspect of the invention; and
- FIG 4: schematically illustrates a non-transient computer-readable data storage medium according to an embodiment of the sixth aspect of the invention.

In the following description, for purposes of explanation and not limitation, specific details are set forth in order to provide a thorough understanding of the present invention. It will be apparent to one skilled in the art that the present invention may be practiced in other implementations that depart from these specific details.

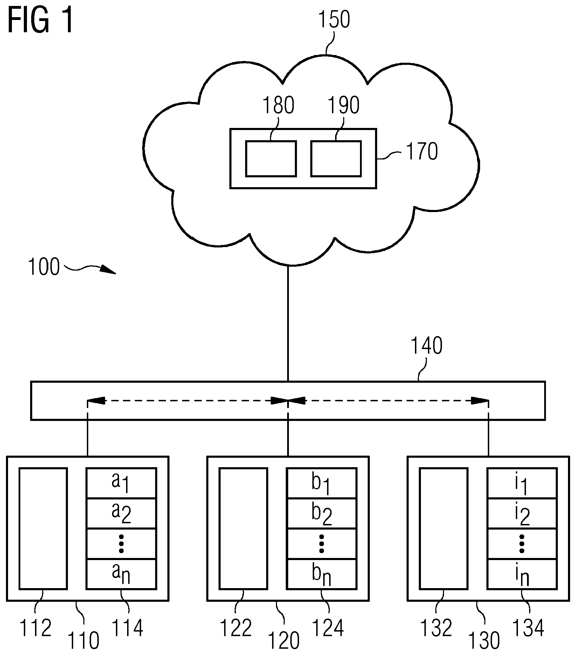

FIG 1 provides a general overview of a system 100 for communication between several local devices 110, 120, 130 in a network of a cloud computing platform 150. The local devices 110, 120, 130 can be part of an industrial plant. Additional local devices, LD, can be added to the system 100. Examples of local devices are acceleration sensors to capture rotational and vibration data of an actuator, which helps in early detection of various failure modes encountered in rotation mechanical equipment. Other examples are medical devices in a healthcare environment or light and temperature sensors in a smart building or pressure sensors in the automotive area.

The devices 110, 120, 130 comprises respectively an IIoT agent 112, 122 and 132 and are connected to an IIoT gateway 140, which in turn is connected by a network to an IIoT cloud computing platform 150. The network may include one or more wide area networks (WAN), such as Internet, local area networks (LAN), or other networks that may facilitate data communication.

If two or more devices 110, 120, 130 want to communicate directly with each other but do not have the same languages/formats in common they can use the service of a translator module 170 located in the cloud computing platform 150. The translator module 170 comprises a processor 180 and other hardware components and a software application 190.

The device 110 can communicate with other devices using its formats/protocols a₁, a₂, ..., aₙ. The device 120 can communicate to other devices using its formats/protocols b₁, b₂, ...,bₙ. The device 130 can communicate to other devices using its formats/protocols i₁, i₂, ..., iₙ. However, if the protocols implemented in the first device 110 a₁, a₂, ..., aₙ are not the same as the protocols implemented in the second device b₁, b₂, ...,bₙ it is not possible for the devices 110, 120, 130 to communicate directly with each other. Therefore, they send the data which they want to communicate to the other device via the gateway 140 to the cloud computing platform 150. In the cloud computing platform 150 the translator module 170 translates, i.e. converts, at least one of the protocols a₁, a₂, ..., aₙ to at least one of the protocols b₁, b₂, ..., bₙ of the second device. For example, the protocol a₁ is translated a transformed to the protocol b₃: a₁ → b₃

This means, the translator module 170 needs to understand at least one protocol/language/format which is understood (i.e. processable or executable) by the first device 110 and at least one protocol/language/format which is understood (i.e. processable or executable) by the second device 120. If the translator module 170 knows one of the protocols a₁, a₂, ..., aₙ of the first device and one of the protocols b₁, b₂, ...,bₙ of the second device, a communication between the two devices 110,120 can be performed. Therefore, the translator module 170 does not need or be able to process all protocols of the two devices, but at least one protocol from the first device 110 which can be translated or converted to at least one protocol of the other device 120. The protocol conversion can be performed in real time. Further, the protocol conversion can be logged for further analyzing the system.

Devices or systems which were not enabled to communicate with each other before can now communicate by an indirect communication by a third party (translator module 170) and exchange therefore data. By using this indirect communication more devices or systems can communicate with each other. Furthermore, if for the communication of the local devices 110, 120, 130 the cloud computing platform 150 is used, a higher level of security for sensitive data can be provided as the IIoT platform 150 can comprise a database regarding permission levels which devices are allowed to communicate with each other. Furthermore, as the cloud computing platform can provide higher calculating speed and more memory space, the quality of the communication is higher and faster.

The local devices can be designed easier as they must not support many protocols originally. This saves design and developing expenditure as well as implementing expenditure and therefore costs. Furthermore, the cloud computing platform 150 can comprise several other communication modules which can generate an automatic communication between specified local devices.

Therefore, according to the present invention the software application 190 of the translator module 170 is designed to understand different protocols, i.e. capable of executing different protocols. The task of this software application 190 is to receive inquiries and to translate them into the required language or format. In a further embodiment, the software application 190 can comprise a second software application or can transmit the inquiry to a second application which can understand and process the language and is able to translate. The data transferred to or transformed into another communication protocol are submitted again directly to the local device 120 which shall be the receiver of the data message.

The translation algorithm (A) of the software application 190 can comprise sub-algorithms (SA1, SA2, ... SAn) which are executable in a serial and/or parallel sequence. Furthermore, a workflow regarding the sequence and the location of the execution of the sub-algorithms (SA1, SA2, ... SAn) can be controlled by a further software application.

The translation algorithm (A) can be configured as a clustering and/or an artificial neural network and/or a Support Vector Machines and/or subdivided into sub-algorithms (SA1, SA2,... SAn) .

According to the present invention devices of different manufacturers can communicate with each other. Complexity reduction can be achieved as it is no longer necessary to support different protocols by one single local device. By using a third-party software application implemented in a cloud computing platform 150 different devices with different communication protocols can be connected to exchange data with each other.

Variously disclosed embodiments include data processing systems and methods that may be used to facilitate the translation of one communication protocol to another communication protocol. In one example, a system may comprise at least one processor configured via executable instructions included in at least one memory to initiate a plurality of translation tasks that are respectively executed by different processing resources. The translation tasks respectively manage respective subsets of communication protocols assigned to respective different local devices 110, 120, 130 to meet communication requirements. This also includes a determination if a communication between two local devices shall be performed in respect to security aspects.

Furthermore, the network may be divided into sub-networks that allow access to all the other components connected to the network. The network may include an encryption scheme that may be employed over the public Internet. The network can be configured in a wired and/or wireless configuration that supports data transfer.

The displayed representation is intended to illustrate one possible configuration of the system 100. Other configurations can include fewer components, and in other configurations additional modules may be utilized. These changes in configurations and components can increase or alter the capabilities of the system 100. Especially in the field of medical imaging devices for capturing high-resolution medical images of a patient such as magnetic resonance imaging (MRI) machines, computer tomography, x-ray, positron emission tomography, scanning microscopy, ultrasound imaging systems the sensors are configured to capture image data, e.g. sensors such as charged-coupled devices (CCD). Further, other types of sensors such as acoustical, optical, piezoelectric, pressure, temperature, chemical sensors can be used to collect additional data for a specific local device 110, 120, 130.

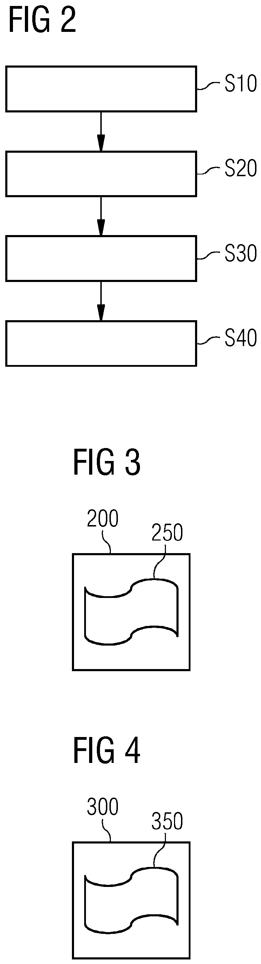

FIG 2 shows a schematic flow diagram illustrating a method according to an embodiment of the second aspect of the present invention. The method of FIG 2 will be described partially using reference signs of FIG 1, although the method of FIG 2 is not restricted to the embodiments described in FIG 1. On the other hand, the method of FIG 2 may be executed using any of the embodiments described with respect to FIG 1 and may, accordingly, be adapted and modified according to any variations and modifications described in the foregoing.

In a step S10 of a method for data communication in a network between two or more local devices 110, 120, 130 and a cloud computing platform 150 data on at least one local device 110 are collected and/or stored.

In a step S20 the data are transmitted to a cloud computing platform 150 using at least one communication protocol (a₁, a₂,..., aₙ) .

In a step S30 the received data are processed by a translation algorithm (A) in a translator module 170 of the cloud computing platform 150, wherein the data are transformed into at least one another communication protocol (b₁, b₂, ..., bₙ) which is understandable or executable by at least one second local device 120. A cloud computing platform 150 according to the fourth aspect of the invention may be provided to perform the step S30 in particular.

In a step S40 the data are submitted with the other communication protocol (b₁, b₂, ..., bₙ) to the at least one second device 120.

FIG 3 schematically illustrates a computer program product 200 comprising executable program code 250 configured to, when executed, perform the method according to the second aspect of the present invention, in particular as has been described with respect to FIG 2.

FIG 4 schematically illustrates a non-transient computer-readable data storage medium 300 comprising executable program code 350 configured to, when executed, perform the method according to the second aspect of the present invention, in particular as has been described with respect to FIG 2.

## Claims

1. A system (100) for data communication in a network between two or more local devices (110, 120, 130) and a cloud computing platform (150), in which data collected and/or stored on at least one local device(110) are transmitted to the cloud computing platform (150) using at least one communication protocol (a₁, a₂,..., aₙ) and processed in a translator module (170) of the cloud computing platform (150), wherein the data are transformed to at least one other communication protocol (b₁, b₂, ..., bₙ) which is processable by at least one second local device (120) and submitted to the at least one second local device (120).

2. The system (100) as claimed in claim 1, wherein the local devices (110, 120, 130) and the cloud computing platform (120) are connected by a gateway (140) which is configured to transmit the data from the at least first local device (110) with the first communication protocol (a₁, a₂,..., aₙ) to the cloud computing platform (120) and to submit the data with the second communication protocol (b₁, b₂, ..., bₙ) from the cloud computing platform (150) to the at least one second local device (120).

3. The system (100) as claimed in claims 1 or 2, wherein a translation algorithm (A) used by the translator module (170) to process the data comprises sub-algorithms (SA1, SA2, ... SAn) which are executable in a serial and/or parallel sequence.

4. The system (100) as claimed in any one of claims 1 to 3, wherein a workflow regarding the sequence and the location of the execution of the sub-algorithms (SA1, SA2, ... SAn) is controlled by a software application.

5. The system (100) as claimed in any one of claims 1 to 4, wherein the translation algorithm (A) is configured as a clustering and/or an artificial neural network and/or a Support Vector Machine and/or is subdivided into sub-algorithms (SA1, SA2,... San) .

6. The system (100) as claimed in any one of claims 1 to 5, wherein the processed data are collected from vibration sensors and/or acoustical sensors and/or optical sensors and/or temperature sensors and/or pressure sensors and/or chemical and/or piezoelectric sensors.

7. The system (100) as claimed in any one of claims 1 to 6, wherein a plurality of local devices (110, 120, 130) is connected in the network.

8. The system as claimed in any one of claims 1 to 7, wherein the two or more local devices (110, 120,130) are configured as an industrial pump, a medical device, an image device, mobile device, an automotive device and/or an analytical scientific instrument.

9. A method for data communication in a network between two or more local devices (110, 120, 130) and a cloud computing platform (150), comprising the steps of:
- collecting and/or storing data (S10) on at least one local device (110),
- transmitting (S20) the data to a cloud computing platform (150) using at least one communication protocol (a₁, a₂,..., aₙ) ,
- processing (S30) the data by a translator module (170) of the cloud computing platform (150), wherein the data are transformed to at least one another communication protocol (b₁, b₂, ..., bₙ) which is processable by at least one second local device (120), and
- submitting (S40) the data with the other communication protocol (b₁, b₂, ..., bₙ) to the at least one second device (120) .

10. The method as claimed in claim 9, comprising the steps of:
- connecting the local devices (110, 120, 130) and the cloud computing platform (120) by a gateway (170),
- transmitting the data from the at least one first local device (110) with the first communication protocol (a₁, a₂, ..., aₙ) to the cloud computing platform (120) by the gateway (170);
- submitting the data with the second communication protocol (b₁, b₂, ..., bₙ) from the cloud computing platform (150) to the at least one second local device (120) by the gateway (170.

11. A local device (110, 120, 130) configured for a system as claimed in any one of claims 1 to 8, wherein the two or more local devices (110, 120, 130) is configured as an industrial pump, a medical device, an image device, mobile device, an automotive device and/or an analytical scientific instrument.

12. A cloud computing platform (150) configured for use in the system (100) as claimed in any one of claims 1 to 8.

13. A non-transient computer-readable data storage medium (300) comprising executable program code (350) configured to, when executed, perform the method according to claim 8 or 9.
